# EUROPÄISCHE PATENTSCHRIFT

(11) **EP 2 850 723 B1**
(45) Veröffentlichungstag und Bekanntmachung des Hinweises auf die Patenterteilung: **07.06.2017**
(21) Anmeldenummer: 12717048.8
(22) Anmeldetag: 03.04.2012
(51) Int. Cl.: H02K 5/22, H02K 5/24

(54) **SKALIERBARE VORRICHTUNG UND ANORDNUNG ZUR SPEICHERUNG UND ABGABE VON ENERGIE**
SCALABLE DEVICE AND ARRANGEMENT FOR STORING AND RELEASING ENERGY
DISPOSITIF ET AGENCEMENT ADAPTABLE POUR STOCKER ET FOURNIR DE L'ÉNERGIE

(43) Veröffentlichungstag der Anmeldung: 25.03.2015
(73) Patentinhaber: Babcock Noell GmbH, 97080 Würzburg (DE)
(72) Erfinder: BOFFO, Cristian, 97078 Würzburg (DE); STEINMANN, Jochen, 97082 Würzburg (DE); WALTER, Wolfgang, 97074 Würzburg (DE); REVILAK, Philipp, 97070 Würzburg (DE); AMEND, Johannes, 97228 Rottendorf (DE); ZÖLLER, Hilmar, 97440 Werneck-Essleben (DE)
(74) Vertreter: Cohausz & Florack
(86) Internationale Anmeldenummer: PCT/EP2012/001471
(87) Internationale Veröffentlichungsnummer: WO 2013/149627

(56) Entgegenhaltungen:
- EP-A1- 2 237 397
- DE-A1- 4 200 824
- DE-C1- 19 709 674
- GB-A- 2 305 992

## Beschreibung

Die Erfindung betrifft eine Vorrichtung nach dem Oberbegriff des ersten Patentanspruches.

Die Erfindung ist überall dort anwendbar, wo kostengünstig gespeicherte Energie kurzfristig zur Verfügung gestellt werden soll.

Die Speicherung von Energie ist für die moderne Gesellschaft im Zuge der Erschließung neuer Energiequellen eine der wichtigsten Fragestellungen, denn die Stabilität des Stromnetzes hängt zu großen Teilen von der Balance zwischen eingespeister und abgerufener Energie ab. Erneuerbare Energien, wie Solarenergie und Windenergie, erzeugen Energie aber nur unstet. Somit stellt sich die grundsätzliche Frage, wie Energie in Phasen der Überproduktion sinnvoll gespeichert werden kann, um diese ohne große Verluste in der Zeit einer Unterproduktion wieder in das Netz zurückzuspeisen. Die Erfindung bietet hierfür eine Lösung. Ein weiteres Anwendungsfeld bietet die sogenannte Power Quality. Selbst kurze Schwankungen des Stromnetzes können empfindliche elektrische Geräte in der Industrie, Forschung und Medizin beschädigen, oder zu längeren Ausfällen führen, da solche Maschinen über Schutzmechanismen verfügen, die sie in solchen Fällen ausschalten. Das Anfahren der Maschinen kann mehrere Stunden dauern und zu erheblichen wirtschaftlichen Einbußen führen. Eine Erfindung, wie sie hier vorgeschlagen wird, kann einer solchen Maschine vorgeschaltet werden und die Ausfälle des Stromnetzes so kompensieren, dass diese Schutzmechanismen nicht erst ausgelöst werden müssen. Eine weitere Anwendung der Erfindung besteht im Bereich der sog. USV-Systeme. Hier handelt es sich um ausfallgeschützte Stromnetze. Dabei kann die Erfindung entweder die gespeicherte Energie zur Verfügung stellen bis der Ausfall behoben wurde, oder eine weitere Notstromquelle, wie sie beispielsweise Dieselgenerator darstellen ersetzen und die weitere Versorgung des Netzes übernehmen.

Für die grundsätzliche Vorhaltung von Energie werden Konzepte, wie Pumpspeicherkraftwerke oder Druckluftenergiespeicher diskutiert, im Bereich Power Quality gibt es derzeit keine standardmäßig genutzten Produkte und im Bereich der USV-Systeme setzt man entweder auf chemische Batterien (Akkus) oder herkömmliche Schwungradspeicher.

DE 197 09 674 C1 beschreibt eine skalierbare Vorrichtung zum Speichern und Abgeben von Energie, bestehend aus einem evakuierbaren Gehäuse mit einem Vakuum, mindestens einer Schwungmasse auf einer Welle, mindestens einem passiven supraleitenden Radiallager sowie einer elektrischen Maschine, die sowohl einen Motor als auch einen Generator darstellt, wobei zur Stabilisierung des Vakuums im Vakuumbehälter eine Kaltfläche angeordnet ist. Im Dokument wird eine Vorrichtung zum Speichern und Abgeben von Energie beschrieben, bei der die Magnetlager in ringförmige hohle Scheiben eingelassen sind. Diese Scheiben oder Kryostate, die durch ihre Kühlfunktion für die supraleitenden, magnetischen Lager bilden Kaltflächen, die somit zur Stabilisierung des Vakuums im Behälter beitragen.

DE 42 00 824 A1 beschreibt einen elektrodynamischen Schwungradspeicher, bei dem Rotorwelle eine Sollbruchstelle aufweist, die außerhalb einer Lagerung des Rotors liegt.

EP 237 397 A1 beschreibt eine Vorrichtung und Anordnung zum Speichern und Abgeben von Energie, wobei der Schwungradspeicher mehre elektrische Maschinen aufweist.

GB 2 305 992 A beschreibt eine Vorrichtung und Anordnung zum Speichern und Abgeben von Energie mit einem evakuierbaren Gehäuse mit Vakuum und einer Schwungmasse, wobei ein Sicherheitsbehältnis frei laufend mit der Haltestruktur des Vakuumbehälters verbunden ist.

Speicherkonzepte, wie Pumpspeicher oder Druckluftspeicher stellen sehr große aufwendige Anlagen dar, die sehr teuer sind. Sie eignen sich also lediglich zum Speichern sehr großer Mengen an Energie, außerdem sind die Konzepte stark von lokalen geographischen Gegebenheiten abhängig und damit nicht überall einsetzbar. Die im USV-Bereich weitverbreiteten Batterien sind meist Blei-Akkus und damit in der Entsorgung aufwändig und nicht umweltverträglich. Zudem sind Batterien meist überdimensioniert, da es eine Kopplung von Leistung und Laufzeit gibt. Wenn Unklarheit über die Einsatzfähigkeit besteht, müssen diese ausgetauscht werden. Herkömmliche Schwungradspeicher sind meist nicht berührungsfrei gelagert und haben durch die auftretende Reibung große energetische Verluste. Derzeitige am Markt befindliche Schwungradspeicher mit magnetischer Lagerung sind auf eine zusätzliche aktive Steuerung des Systems zu dessen Stabilisierung angewiesen. Konzepte zur Umsetzung von reibungsfreien Schwungradspeichern, die auf supraleitender Lagerung beruhen, wie in DE19709674C1 oder DE19643844C1*,* wurden häufig vorgeschlagen, doch konnten sie nie wirklich in Anlagen eingesetzt werden. Dies liegt zum Beispiel an Sicherheitsaspekten bei Störfällen, wie Vakuumundichtigkeit, oder wenn sich Teile der Schwungmasse bei hohen Drehgeschwindigkeiten lösen und so zu Projektilen werden.

Im Weiteren sind die Systeme meist komplex aufgebaut und nur schwer zu skalieren.

Es ist daher Aufgabe der Erfindung, eine auf einem Schwungrad basierende Vorrichtung zur Speicherung von Energie zu entwickeln, die in ihrer Größe, Leistung, Speicherkapazität und Sicherheitsvorrichtungen für die verschiedenen Anwendungen skalierbar ist und durch eine berührungslose magnetische passive Lagerung sehr verlustarm arbeitet.

Weiterhin soll die Erfindung eine kostengünstige und im Einsatz flexible Alternative zu derzeitigen Energiespeicherkonzepten darstellen.

Diese Aufgabe wird durch eine Vorrichtung nach den Merkmalen des ersten Patentanspruches gelöst.

Die Unteransprüche geben vorteilhafte Ausgestaltungen der Erfindung wieder.

Die erfindungsgemäße Lösung besteht aus einer skalierbaren Vorrichtung zum Speichern und Abgeben von Energie bestehend aus einem evakuierbaren Behälter wie einem Vakuumbehälter, einem Vakuum, mindestens einer Schwungradmasse auf einer Welle, mindestens einem passiven supraleitenden Lager, wie einem Radiallager sowie einer elektrischen Maschine, die sowohl einen Generator als auch einen Motor darstellt.

Das System besteht also aus einer senkrecht stehenden Welle an der die Schwungmasse und Rotoreinheiten der Lager und der elektrischen Maschine angeordnet sind. Im weiteren ist in dem System eine elektrische Maschine angeordnet, die die Welle sowohl als Motor antreiben kann, als auch als Generator dem System seine Energie zuführen kann. Im Weiteren verfügt das System über zwei supraleitende Lager nahe den Enden der Welle, die eine reibungsfreie Rotation der Welle ermöglichen. Für die Kühlung der Lager, sowie zur Reduktion des Reibungswiderstandes des Rotors ist es von Vorteil, das System bei erniedrigtem Druck, oder besser noch in einem Vakuum zu betreiben. Dazu muss sich das System in einem Behälter befinden. Ferner ist im System ein Sicherheitsbehältnis angeordnet, das den Austritt von stark beschleunigten Teilchen aus dem System verhindern soll. Zudem soll bei einem Störfall, bei dem es zum Kontakt mit der Schwungmasse kommt, helfen, deren Energie abzubauen. Das Sicherheitsbehältnis besteht aus einem oberen und einem unteren Abdeckelement, zwischen denen ein oder mehrere Fixierelemente angeordnet sind, die Aussparungen für Lamellen aufweisen. Diese können aus metallischen oder Faserverbundwerkstoffen bestehen. In die Aussparungen werden Lamellen gesetzt. Diese enden nahe den Ringen. Die Lamellen können sowohl aus einem Stück, als auch aus einzelnen Elementen aufgebaut sein. Diese Elemente können so über Gelenke verbunden sein, dass sie die Form einer versteiften Wölbung aufweisen. Die Elemente können aus metallischen oder Faserverbundwerkstoffen bestehen. Ferner können diese Elemente aus einem Block bestehen, oder einen Hohlraum aufweisen. In das Füllvolumen des Hohlraumes der Lamellen können auch weitere Materialien eingebracht werden, wie diese zur Abbremsung von Projektilen verwendet werden. Zwischen die Lamellen und die Fixierungselementen können auch weiterhin dämpfende Materialien, wie weiche Metalle, Faserverbundwerkstoffe, oder Polymere eingebracht werden. Oberhalb und unterhalb der Anordnung sind Abdeckringe angeordnet, die mit den anderen Teilen über Verbindungsstangen verschraubt werden. Das gesamte Sicherheitsbehältnis kann entweder mit der Kammer fest verbunden werden, indem es beispielsweise in eine Haltestruktur gesetzt werden kann, oder es kann freilaufend eingesetzt werden. Dann kann es sich bei Kontakt mit der Schwungmasse mit dieser mit Drehen. Das Sicherheitsbehältnis kann auch aus einzelnen Segmenten der Fixierelemente oder der oberen und unteren Abdeckplatte gebaut sein. Gemäß der Erfindung ist im System eine Kaltfläche vorgesehen. Diese unterstützt das Vakuum im Behälter, da Teile des Restgases im Behälter an ihr anfrieren können. Auch für den Fall eines Einfließens von Luft in das Vakuum durch eine undichte Stelle im Behälter, kann diese Fläche den Anstieg des Druckes im System so verlangsamen, dass es abgeschaltet werden kann. Dadurch kann ein permanenter Anschluss einer Vakuumpumpe vermieden werden, was die Kosten reduziert. Die Kaltfläche ist durch ein Verbindungselement, das entweder Konduktion, Konvektion, oder den thermoakustischen Effekt zur Wärmeübertragung nutzt, entweder direkt mit einer Kältequelle, oder dem Kühlmantel der supraleitenden Lager verbunden. Die der Außenwand zugewandte Seite kann mit reflektierenden Mitteln gegen Wärmeeintrag durch Strahlung isoliert sein. Ferner kann zum schnelleren Erwärmen des Systems eine Heizung der Fläche, durch beispielsweise einen Draht, der bestromt wird, vorgesehen sein.

Als Kältequelle für das System können entweder einer oder mehrere Kryokühler verwendet werden, oder Kammern die mit einem kryogenen Mittel, wie z.B. flüssigem Stickstoff befüllt sind. Dabei kann die Kammer zusätzlich auch mit einem externen kryogenen Kreislauf verbunden sein, oder durch einen Kryokühler gekühlt werden. Die Kaltfläche kann zum Beispiel Radial zu den supraleitenden Lager liegen, vorzugsweise in einer engen Anbindung an dasselbige.

Die Schwungmasse des Systems besteht vorzugsweise aus CFK. Damit ist gesichert, dass es höhere Drehgeschwindigkeiten aushält. Die Schwungmasse kann aber auch aus anderen Faserverbundwerkstoffen aufgebaut sein.

Zur reibungsfreien Lagerung des Systems werden zwei supraleitende Lager verwendet. Es kann aber auch eine Kombination aus einem supraleitenden und einem permanentmagnetischen Lager verwendet werden.

Bei dem supraleitenden Lager handelt es sich um ein Radial Lager, das sowohl axiale, als auch radiale Steifigkeit aufweist. Darüber hinaus hat das supraleitende Lager den Vorteil, dass es passiv wirkt, also ohne eine aktive Steuerung, also dem System allein aus seinen physikalischen Eigenschaften heraus eine Stabilität verleiht. Das ist mit einer Anordnung nur aus permanentmagentischen Lagern nicht möglich.

Das supraleitende Lager bringt Stabilität in das System. Während des Abkühlens wird das Magnetfeld des rotorseitigen Gegenstückes aus Permanentmagneten in der Struktur des Hochtemperatursupraleiters eingefroren. Jeder Änderung dessen, also jeder Bewegung des Rotors aus seiner Position heraus, setzt das Magnetlager eine Kraft entgegen. Dadurch wird der Rotor in seiner Position stabilisiert. Als supraleitendes Material wird vorzugsweise YTTRIUM BARIUM COPPER OXIDE als Vollmaterial verwendet. Man kann allerdings auch Kupferoxidkeramiken mit anderen seltenen Erden verwenden (RARE EARTH BARIUM COPPER OXIDE), oder Materialien wie Bismuth strontium calcium copper oxide, oder Magnesiumdiboride. Da das supraleitende Lager gekühlt werden muss, ist es vorteilhaft, dieses räumlich von der elektrischen Maschine und dem Hauptlager zu trennen, denn in der Maschine wird Wärme erzeugt, die die Funktionsfähigkeit des als supraleitenden Lagers beeinträchtigt. Die Lager sind über geeignete Mittel an eine Kältequelle angebunden, die zur Wärmeübertragung Konduktion, Konvektion, oder den thermoakustischen Effekt nutzen. Das kann im einfachsten Fall durch ein Kabel aus Kupfer geschehen.

Im Weiteren ist es vorteilhaft, die rotorseitigen Lagerkomponenten als Außenläufer auszuführen, da sie durch die auftretende Fliehkraft an die Struktur gepresst werden.

In der Ausführung als Außenläufer müssen diese nicht aufwändig fest geklebt und bandagiert werden.

Werden sie als Innenläufer ausgeführt, müssen sie festgeklebt und bandagiert werden.

Das Lager kann also sowohl als Innenläufer, als auch als Außenläufer ausgeführt werden. Im Weiteren können die Lager, wie die Kaltfläche, mit einer Heizung ausgestattet sein, die das Erwärmen zu Wartungszwecken beschleunigt.

Sollte es für das Skalieren notwendig sein, können entlang der Welle noch weitere kleine Lager zur Stabilisierung angeordnet werden.

Die elektrische Maschine dient dem System sowohl als Motor, als auch Generator und regelt somit Zu- und Abfuhr von Energie in das System. Sie kann sowohl als eine elektrische Maschine mit Permanentmagneten auf dem Rotor ausgeführt werden, als auch ohne Permanentmagnete auf dem Rotor. Letztere Variante ist für Anwendungen bei denen das Schwungrad sich lange im Leerlauf befindet, zu bevorzugen, da somit die Verluste durch Wirbelströme reduziert werden können. Zur Kühlung des Stators der elektrischen Maschine kann entweder Luft, Wasser, Öl, oder ein anderes Fluid verwendet werden. Auch ein Mittel das zum Wärmetransport auf den thermoakustischen Effekt zurückgreift kann verwendet werden. Die elektrische Maschine kann oberhalb oder unterhalb der Schwungmasse angeordnet sein, muss sich aber zwischen den beiden supraleitenden Lagern befinden.

Eine Maschine kann auch so aufgeteilt sein, dass sie sich sowohl oberhalb, als auch unterhalb der Schwungmasse befindet. Auf diese Weise können auch mehr als eine Maschine in dem System angeordnet werden.

Generell sind Anordnungen zu bevorzugen, die eine Symmetrie zur Ebene der Schwungmasse bereitstellen.

Die elektrische Maschine kann sowohl als Innen- als auch als Außenläufer ausgeführt sein. Im Falle des Außenläufers kann sie sogar in die Schwungmasse integriert werden.

Durch diese Ausführung des Systems wird ein Energiespeicher zur Verfügung gestellt, der effizient und kostengünstig mit minimierten Energieverlusten arbeitet, skalierbar ist und auch genügend Sicherheitselemente aufweist, um in industriellen Umgebungen eingesetzt werden zu können.

Im Folgenden wird die Erfindung anhand von sieben Figuren und einem Ausführungsbeispiel näher erörtert. Die Figuren zeigen:
- Figur 1:: Ansicht von oben auf das Fixierungselement mit Lamellen aus einzelnen Elementen
- Figur 2:: Vergrößerung eines Ausschnittes von Fig. 1
- Figur 3:: Perspektivische Darstellung des Sicherheitsbehältnisses
- Figur 4:: Schematische Darstellung der erfindungsgemäßen Lösung als Schwungradspeicher, wobei die Rotoreinheiten als Innenläufer mit Kryokühler ausgeführt sind.
- Figur 5:: Schematische Darstellung der erfindungsgemäßen Lösung als Schwungradspeicher, wobei die Rotoreinheiten als Außenläufer mit Kryokühler angeführt sind.
- Figur 6:: Schematische Darstellung der erfindungsgemäßen Lösung als Schwungradspeicher, wobei die Rotoreinheiten als Außenläufer mit Kryokühler mit zwei Motoren ausgeführt sind.
- Figur 7:: Schematische Darstellung der erfindungsgemäßen Lösung als Schwungradspeicher ohne Sicherheitsbehältnis, wobei die Rotoreinheiten als Innenläufer mit Kühlung durch ein kryogenes Mittel ausgeführt sind.

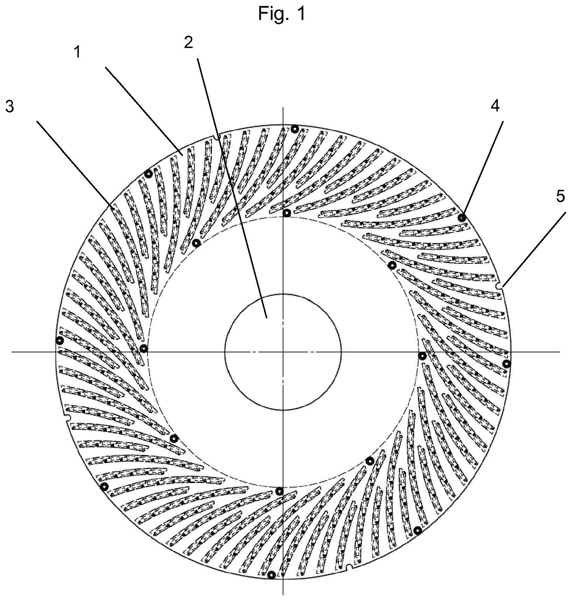

Die *Figur 1* zeigt in Ansicht von oben auf das Fixierelement 1 mit Lamellen 3 in den Aussparungen des Fixierelementes 1, wobei die Lamellen 3 bogenförmig angeordnet sind und aus einzelnen Elementen bestehen. Das ringförmige Fixierelement 1 bildet einen Ring um die Schwungmasse 2 und soll verhindern, dass Teile von dieser nach außen gelangen. Das Fixierelement 1 weist Löcher 4 für die Verbindungsstäbe auf und Aussparungen 5, damit die Sicherheitsvorrichtung in eine Haltestruktur einsetzbar ist.

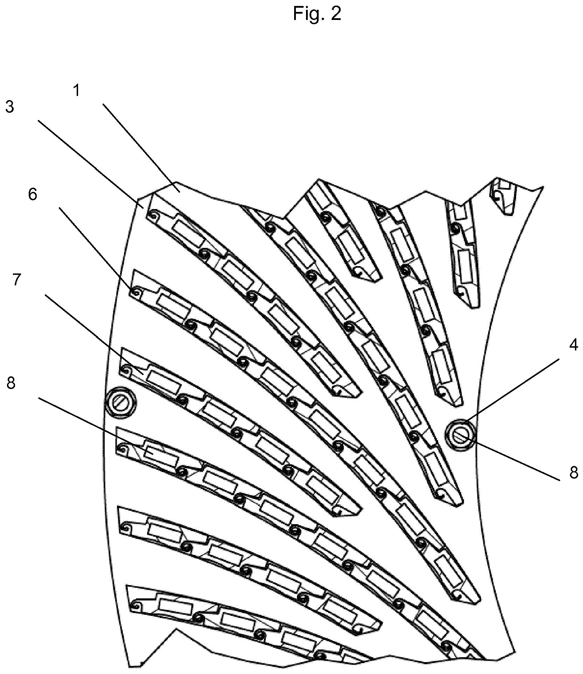

Die *Figur 2* zeigt eine Ausschnittvergrößerung von Figur 1, wobei die Lamellen 3 an den Aussparungen des Fixierelementes 1 aus mehreren Elementen 7 bestehen, die durch Verbindungsgelenke 6 miteinander verbunden sind, wobei die Elemente 7 Hohlräume 8 aufweisen, in denen Füllungen vorhanden sind, die für den Fall, dass Teile der Schwungmasse 2 in die Sicherheitseinrichtung geschleudert werden, ein schnelles Abbremsen dieser Teile gewährleistet ist.

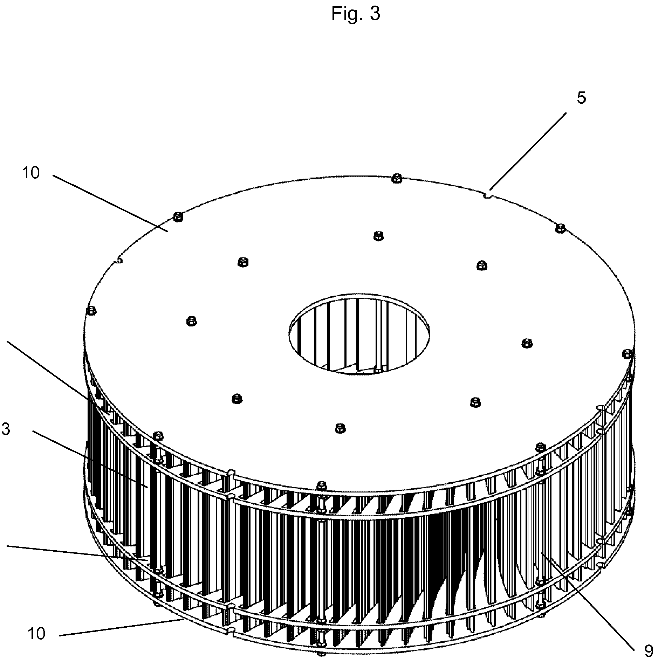

Wie die *Figur 3* in perspektivischer Darstellung zeigt, weist das Sicherheitsbehältnis eine obere und eine untere Abdeckung 10 auf, die durch Verbindungsstäbe 9 miteinander verbunden sind, wobei zwischen der oberen und der unteren Abdeckung 10 im vorliegenden Beispiel zwei Fixierelemente 1 angeordnet sind, die die Lamellen 3 in ihren Zwischenräumen halten. Wie die Figur 2 zeigt, können nicht nur in den Hohlräumen der einzelnen Elemente 7 Füll- oder Dämpfungselemente 8 angeordnet sein, sondern auch zwischen den Löchern der Fixierelemente und den darin befindlichen Verbindungsstäben 9. Das Sicherheitsbehältnis, welches in Figur 3 perspektivisch dargestellt ist, kann auch segmentweise ausgeführt sein, d. h. sowohl die Abdeckringe 10 als auch die Fixierelemente 1 sind aus einzelnen Abschnitten oder Segmenten zusammengesetzt.

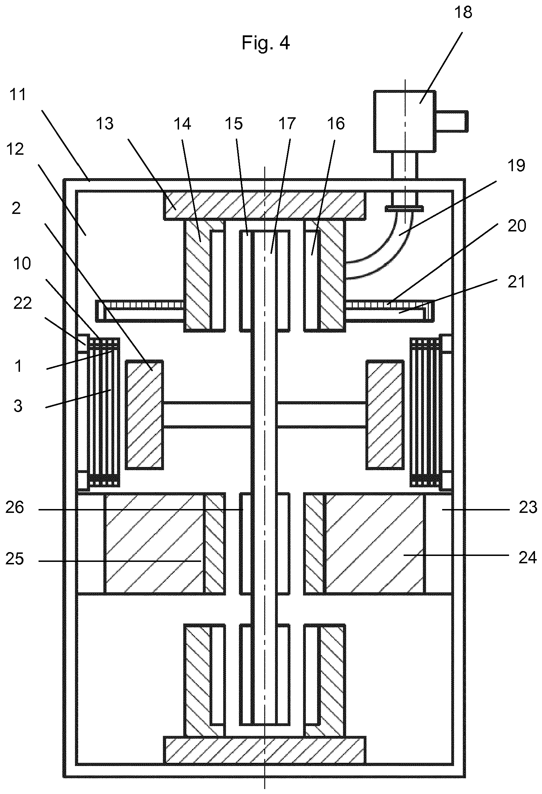

Das Sicherheitsbehältnis von Figur 3 kann in vorteilhafter Weise in den erfindungsgemäße Lösung wie dem Schwungradspeicher, beispielsweise als Rotoreinheit mit Innenläufer mit Kryokühler 18, eingesetzt werden, wie das in schematischer Darstellung in *Figur 4* gezeigt ist. Diese Figur 4 zeigt die Schwungmasse 2, welche sich um die Welle 17 dreht und in einem Vakuumbehälter 11 angeordnet ist, in welchem sich ein Vakuum 12 befindet. Die Welle 17 weist beidseitig eine Rotoreinheit 15 des Lagers auf, wobei das Lager beidseitig supraleitende Elemente 16 in einer Einfassung 14 aufweist, die einen Kühlmantel des supraleitenden Lagers darstellt und mittels Kryokühlers 18, der sich außerhalb des Vakuumbehälters 11 befindet, gekühlt wird. Mittels Kühlanbindung 19 im Kryokühler 18 der Einfassung des Lagers 14 wird die Kälte von Kryokühler 18 zum Lager gebracht, wobei zwischen dem Vakuumbehälter 11 und den Einfassungen 14 des Kühlmantels beidseitig Aufhängungen 13 angeordnet sind. Das Sicherheitsbehältnis, besteht aus den Lamellen 3, Fixierelementen 1 und Abdeckringen 10 und umgibt in schützender Weise die Schwungmasse 2, wozu das Sicherheitsbehältnis am Vakuumbehälter 11 über eine Haltestruktur 22 befestigt ist. In vorteilhafter Weise ist diese Befestigung zwischen Sicherheitsbehältnis und Vakuumbehälter 11 so gestaltet, dass sich das Sicherheitsbehältnis in der Haltestruktur mit drehen kann, so dass die Energie von Teilen, die von der Schwungmasse 2 weggeschleudert werden, schneller aufnehmbar ist, ohne dass das Sicherheitsbehältnis zerstört wird.

Als wesentliches Teil des Schwungradspeichers ist die elektrische Maschine 24 mit ihrer Haltestruktur 23 angeordnet, wobei die Haltestruktur 23 die elektrische Maschine 24 mit dem Vakuumbehälter 11 verbindet. Gegenüber der elektrischen Maschine 24 auf der Welle 17 angeordnet befindet sich die Rotoreinheit 26 der elektrischen Maschine 24 sowie die Statoreinheit 25. Gemäß der Erfindung ist an der Einfassung 14 und dem Kühlmantel des supraleitenden Lagers eine Kaltfläche 21 angeordnet, an der Gasteilchen im Vakuum gefrieren und damit das Vakuum erhöhen oder stabilisieren. Die Kaltfläche 21 weist auf ihrer Rückseite eine Isolation 20 auf. Damit wird verhindert, dass die Kaltfläche in diese Richtung Energie verliert.

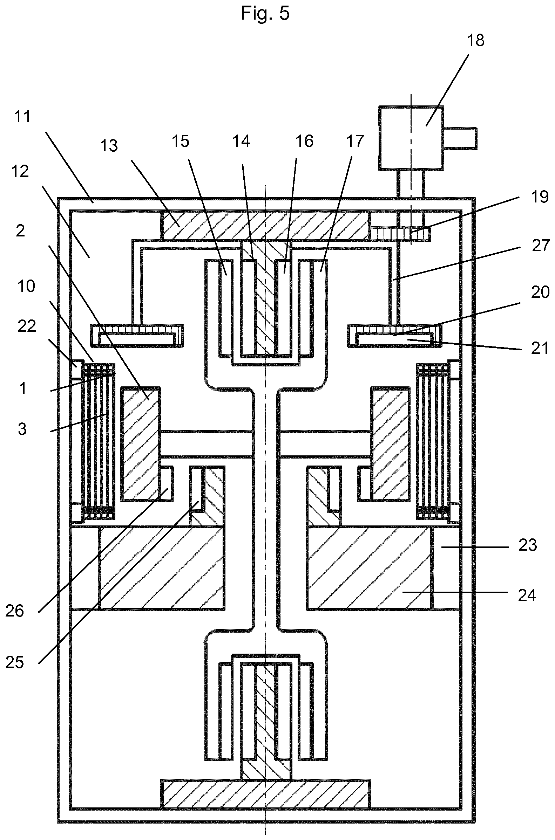

Die *Figur* 5 zeigt die erfindungsgemäße Lösung als Schwungradspeicher, welcher als Rotoreinheit mit einem Außenläufer mit Kryokühler 18 ausgeführt ist. Die gesamte Vorrichtung befindet sich in einem Vakuumbehälter, wobei auf einer Welle 17, die an ihren Enden die Einfassung 14 des Kühlmantels mit den supraleitenden Elementen des Lagers 16 umgibt und in diesem Bereich die Rotoreinheit 15 des Lagers aufweist. Die Einfassung des Kühlmantels 14 ist beidseitig mit dem Vakuumbehälter über die Aufhängung 13 verbunden. Der Kryokühler 18 befindet sich außerhalb des Gehäuses und weist eine Kühlanbindung 19 an das Lager auf. Die Schwungmasse 2 ist auch im vorliegenden Fall von einem Sicherheitsbehälter umgeben, der aus Lamellen 3, Fixierelementen 1 und Abdeckringen 10 besteht und über die Haltestruktur 22 mit dem Vakuumbehälter 11 verbunden ist. Auch im vorliegenden Ausführungsbeispiel sind in vorteilhafter Weise Kühlflächen 21 mit einer Isolation 20 angeordnet, wobei die Kühlflächen 21 mit einer Kühlanbindung 27 zur Einfassung 14 für den Kühlmantel versehen sind. An der Schwungmasse 2 ist eine Rotoreinheit 26 angeordnet, die der Statoreinheit 25 der elektrischen Maschine 24 gegenüberliegt. Die elektrische Maschine 24 ist mittels einer Haltestruktur 23 mit dem Vakuumbehälter 11 verbunden.

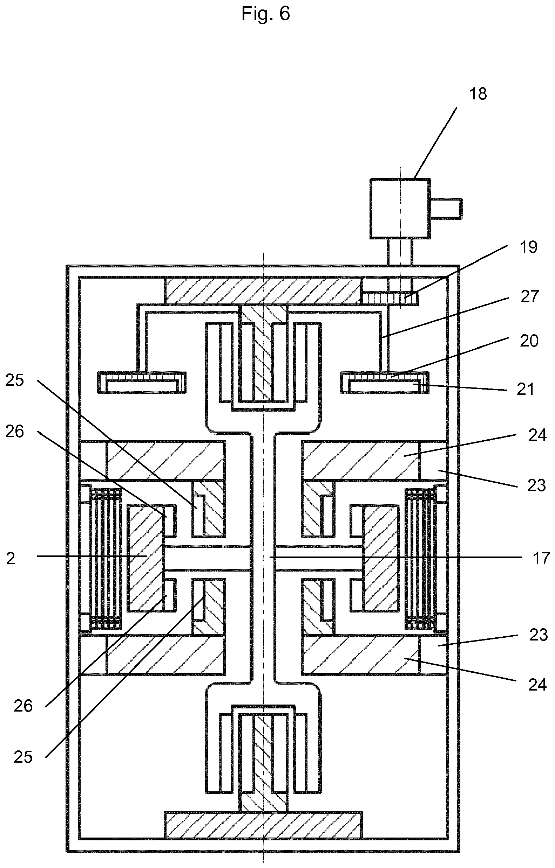

Eine weitere günstige Ausführungsvariante zeigt in schematischer Darstellung die *Figur 6**,* bei der ein Schwungradspeicher mit Schwungmasse 2 gezeigt ist und die Rotoreinheit als Außenläufer ausgeführt ist. Kryobehälter 18, Kaltfläche 21 und deren Isolierung 20 sowie Kühlanbindung 27 sind in analoger Weise wie in Figur 5 ausgeführt. Gleiches gilt für das Sicherheitsbehältnis um die Schwungmasse, wobei die Schwungmasse 2 beidseitig eine Rotoreinheit 26 aufweist, der Statoreinheiten 25 der elektrischen Maschine 24 gegenüberliegen, wobei die elektrische Maschine 24 beidseitig des Sicherheitsbehälters angeordnet und über die Haltestruktur 23 mit dem Vakuumbehälter 11 verbunden sind.

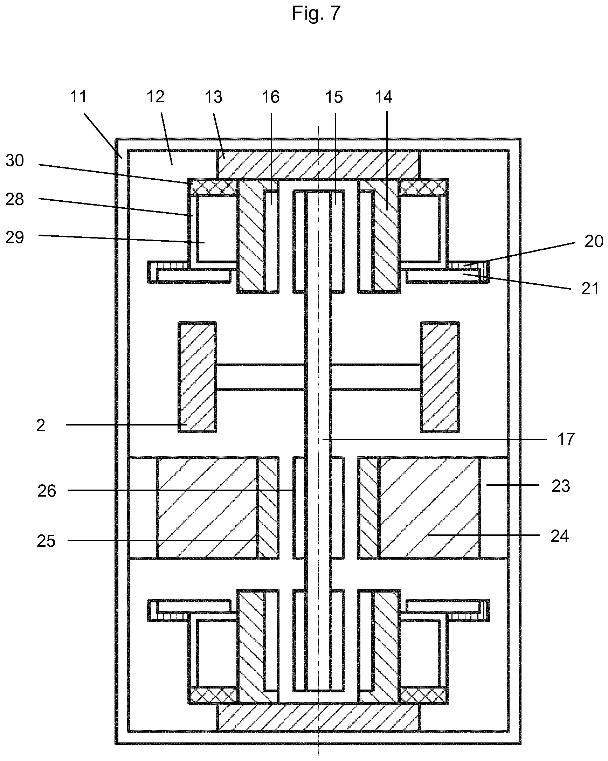

In einem weiteren Ausführungsbeispiel, welches in *Figur 7* dargestellt ist, wird die erfindungsgemäße Lösung des Schwungradspeichers ohne Sicherheitsbehältnis gezeigt, wobei die Kühlflächen 21 mit einer Isolation 20 versehen sind, als Kühlung der Kammer 28 für flüssigen Stickstoff 29 dient, also kein Kryokühler, sondern ein kryogenes Mittel für die Kühlung der Kaltfläche 21 sorgt. Die Rotoreinheit 26 ist als Innenläufer ausgeführt, das heißt, an der Welle 17 sind Rotoreinheiten 26 gegenüber den Statoreinheiten 25 der elektrischen Maschine 24 angeordnet, die über die Haltestruktur 23 mit dem Vakuumbehälter 11 verbinden ist. Die supraleitenden Elemente 16 liegen der Rotoreinheit 15 des Lagers beidseitig und zu beiden Seiten Welle 17 gegenüber, wobei auch in diesem Fall die Einfassung 14 des supraleitenden Lagers über die Aufhängung 13 des Lagers mit dem Vakuumbehälter 11 verbunden sind.

### Liste der verwendeten Bezugszeichen

- 1: Fixierungselement mit Aussparungen
- 2: Schwungmasse
- 3: Lamelle
- 4: Loch für Verbindungsstab
- 5: Aussparung zum Einsetzen in Haltestruktur
- 6: Verbindungsgelenk zwischen Elementen
- 7: Element
- 8: Hohlraum bzw. Füllvolumen des Elementes
- 9: Verbindungsstab des Sicherheitsbehältnisses
- 10: Abdeckring
- 11: Vakuumbehälter
- 12: Vakuum
- 13: Aufhängung des supraleitenden Lagers
- 14: Einfassung und Kühlmantel des supraleitenden Lagers
- 15: Rotoreinheit des Lagers
- 16: Supraleitende Elemente des Lagers
- 17: Welle
- 18: Kryokühler
- 19: Kühlanbindung des Lagers
- 20: Isolation der Kaltfläche
- 21: Kaltfläche
- 22: Haltestruktur des Sicherheitsbehältnisses
- 23: Haltestruktur der elektrischen Maschine
- 24: Elektrische Maschine
- 25: Statoreinheit der elektrischen Maschine
- 26: Rotoreinheit der elektrischen Maschine
- 27: Kühlanbindung der Kaltfläche
- 28: Kammer für flüssigen Stickstoff
- 29: Flüssiger Stickstoff
- 30: Isolierende Aufhängung der Kammer

## Patentansprüche

1. Vorrichtung zum Speichern und Abgeben von Energie, bestehend aus einem evakuierbaren Gehäuse mit einem Vakuum (12), mindestens einer Schwungmasse (2) auf einer Welle (17), mindestens einem passiven supraleitenden Radiallager sowie einer elektrischen Maschine (24), die sowohl einen Motor als auch einen Generator darstellt, wobei
zur Stabilisierung des Vakuums (12) im Vakuumbehälter (11) eine Kaltfläche (21) angeordnet ist,
**dadurch gekennzeichnet, dass**
die Kaltfläche (21)
- eine Isolierung (20)
- oder eine Heizung oder
- eine Isolierung (20) und eine Heizung aufweist.

2. Vorrichtung nach Anspruch 1, **dadurch gekennzeichnet, dass** die Kaltfläche (21) mit einem Kryokühler (18) oder mit einer Kammer (28) mit flüssigem Stickstoff (29) in Verbindung steht.

3. Vorrichtung nach einem der Ansprüche 1 und 2, **dadurch gekennzeichnet, dass** die Kaltfläche (21) radial zur Schwungmasse (2) oder/und radial zu dem oder den supraleitenden Radiallagern angeordnet ist.

4. Vorrichtung nach einem der Ansprüche 1 bis 3, **dadurch gekennzeichnet, dass** eines der Lager als Permanentmagnetlager ausgeführt ist.

5. Vorrichtung nach einem der Ansprüche 1 bis 4, **dadurch gekennzeichnet, dass** ein Lager als Innen- und ein Lager als Außenläufer ausgebildet ist.

6. Vorrichtung nach einem der Ansprüche 1 bis 5, **dadurch gekennzeichnet, dass** beide Lager entweder als Innen- oder als Außenläufer ausgebildet sind.

7. Vorrichtung nach einem der Ansprüche 1 bis 6, **dadurch gekennzeichnet, dass** am supraleitenden Lager eine Heizung angeordnet ist.

8. Vorrichtung nach einem der Ansprüche 1 bis 7, **dadurch gekennzeichnet, dass** an der Rotoreinheit (26) der elektrischen Maschine (24) mindestens ein Permanentmagnet angeordnet ist.

9. Vorrichtung nach einem der Ansprüche 1 bis 8, **dadurch gekennzeichnet, dass** die elektrische Maschine (24) einen Außenläufer darstellt.

10. Vorrichtung nach Anspruch 9, **dadurch gekennzeichnet, dass** der Schwungradspeicher mehrere elektrische Maschinen (24) aufweist.

11. Vorrichtung nach einem der Ansprüche 1 bis 10, **dadurch gekennzeichnet, dass** der elektrische Maschine (24) einen Innenläufer darstellt.

12. Vorrichtung nach einem der Ansprüche 1 bis 11, **dadurch gekennzeichnet, dass** um die Schwungmasse (2) ein Sicherheitsbehältnis, bestehend aus mindestens einem Fixierelement (1), Lamellen (3), Abdeckringen (10) oder Abdeckelementen und Bindungsteilen angeordnet ist.

13. Vorrichtung nach Anspruch 12, **dadurch gekennzeichnet, dass** das Sicherheitsbehältnis freilaufend mit der Haltestruktur (22) des Vakuumbehälters (11) verbunden ist.

14. Vorrichtung nach einem der Ansprüche 1 bis 13, **dadurch gekennzeichnet, dass** das Gehäuse in einer externen Struktur befestigt ist, die ungewünschte Schwingungsmoden des Systems unterdrückt.

## Claims

1. Device for storing and discharging energy, consisting of a housing which can be evacuated and which has a vacuum (12), at least one flywheel mass (2) on a shaft (17), at least one passive superconductive radial bearing and an electrical machine (24) which constitutes both a motor and a generator, wherein
in order to stabilise the vacuum (12) a cold surface (21) is arranged in the vacuum container (11), **characterised in that** the cold surface (21) has
- an insulation (20)
- or a heating or
- an insulation (20) and a heating.

2. Device according to claim 1, **characterised in that** the cold surface (21) is connected to a cryocooler (18) or to a chamber (28) with liquid nitrogen (29).

3. Device according to either claim 1 or claim 2, **characterised in that** the cold surface (21) is arranged radially with respect to the flywheel mass (2) and/or radially with respect to the superconductive radial bearing(s).

4. Device according to any one of claims 1 to 3, **characterised in that** one of the bearings is designed as a permanent magnetic bearing.

5. Device according to any one of claims 1 to 4, **characterised in that** one bearing is constructed as an internal rotor and one bearing is constructed as an external rotor.

6. Device according to any one of claims 1 to 5, **characterised in that** both bearings are constructed as either internal or external rotors.

7. Device according to any one of claims 1 to 6, **characterised in that** a heating is arranged at the superconductive bearing.

8. Device according to any one of claims 1 to 7, **characterised in that** at least one permanent magnet is arranged on the rotor unit (26) of the electrical machine (24).

9. Device according to any one of claims 1 to 8, **characterised in that** the electrical machine (24) constitutes an external rotor.

10. Device according to claim 9, **characterised in that** the flywheel accumulator has several electrical machines (24).

11. Device according to any one of claims 1 to 10, **characterised in that** the electrical machine (24) constitutes an internal rotor.

12. Device according to any one of claims 1 to 11, **characterised in that** a safety container consisting of at least one fixing element (1), slats (3), cover rings (10) or covering elements and connection parts is arranged around the flywheel mass (2).

13. Device according to claim 12, **characterised in that** the safety container is connected in a free-running manner with the support structure (22) of the vacuum container (11).

14. Device according to any one of claims 1 to 13, **characterised in that** the housing is mounted in an external structure which lowers undesirable oscillation modes of the system.

## Revendications

1. Dispositif adaptable servant à stocker et à dégager de l'énergie, ledit dispositif étant constitué d'un bâti pouvant être évacué et avec un vide (12), d'au moins une masse d'inertie (2) sur un arbre (17), d'au moins un palier radial supraconducteur passif ainsi que d'une machine électrique (24) qui représente aussi bien un moteur qu'un générateur,
auquel cas
une surface froide (21) est disposée dans le récipient à vide (11) afin de stabiliser le vide (12), **caractérisé en ce que** la surface froide (21) présente
- une isolation (20)
- ou un chauffage
- ou une isolation (20) et un chauffage.

2. Dispositif selon la revendication 1, **caractérisé en ce que** la surface froide (21) est reliée à un refroidisseur cryogénique (18) ou à une chambre (28) avec de l'azote liquide (29).

3. Dispositif selon une des revendications de 1 à 2, **caractérisé en ce que** la surface froide (21) est agencée radialement par rapport à la masse d'inertie (2) ou/et radialement par rapport au ou aux paliers radiaux supraconducteurs.

4. Dispositif selon une des revendications de 1 à 3, **caractérisé en ce qu'**un des paliers est réalisé en tant que palier à aimants permanents.

5. Dispositif selon une des revendications de 1 à 4, **caractérisé en ce qu'**un palier est réalisé en tant que rotor intérieur et qu'un palier est réalisé en tant que rotor extérieur.

6. Dispositif selon une des revendications de 1 à 5, **caractérisé en ce que** les deux paliers sont réalisés soit en tant que rotors intérieurs, soit en tant que rotors extérieurs.

7. Dispositif selon une des revendications de 1 à 6, **caractérisé en ce qu'**un chauffage est agencé sur le palier supraconducteur.

8. Dispositif selon une des revendications de 1 à 7, **caractérisé en ce qu'**au moins un aimant permanent est agencé sur l'entité rotor (26) de la machine électrique (24).

9. Dispositif selon une des revendications de 1 à 8, **caractérisé en ce que** la machine électrique (24) représente un rotor extérieur.

10. Dispositif selon la revendication 9, **caractérisé en ce que** le stockage à volant présente plusieurs machines électriques (24).

11. Dispositif selon une des revendications de 1 à 10, **caractérisé en ce que** la machine électrique (24) représente un rotor intérieur.

12. Dispositif selon une des revendications de 1 à 11, **caractérisé en ce qu'**un récipient de sécurité est agencé autour de la masse d'inertie (2), ledit récipient de sécurité étant constitué d'au moins un élément de fixation (1), des lamelles (3), des bagues de recouvrement (10) ou des éléments de recouvrement et des parties de fixation.

13. Dispositif selon la revendication 12, **caractérisé en ce que** le récipient de sécurité est en relation libre avec la structure de support (22) du récipient à vide (11).

14. Dispositif selon une des revendications de 1 à 13, **caractérisé en ce que** le bâti est fixé dans une structure extérieure qui réprime des modes d'oscillation non souhaités du système.
